# EUROPÄISCHE PATENTSCHRIFT

(11) **EP 1 531 967 B1**
(45) Veröffentlichungstag und Bekanntmachung des Hinweises auf die Patenterteilung: **21.06.2006**
(21) Anmeldenummer: 03766258.2
(22) Anmeldetag: 23.07.2003
(51) Int. Cl.: B23P 21/00, B62D 65/00, B23Q 7/14, B23K 37/047

(54) **BEARBEITUNGSANLAGE**
MACHINING SYSTEM
INSTALLATION D'USINAGE

(30) Priorität: 30.07.2002 DE 20211755 U
(43) Veröffentlichungstag der Anmeldung: 25.05.2005
(73) Patentinhaber: KUKA Schweissanlagen GmbH, 86165 Augsburg (DE)
(72) Erfinder: GERHARD, Kraus, 86316 Friedberg (DE)
(74) Vertreter: Ernicke, Hans-Dieter
(86) Internationale Anmeldenummer: PCT/EP2003/008016
(87) Internationale Veröffentlichungsnummer: WO 2004/012898

(56) Entgegenhaltungen:
- DE-A- 19 713 860
- FR-A- 2 712 833
- US-A- 4 611 749
- US-A1- 2001 003 861

## Beschreibung

Die Erfindung betrifft eine Bearbeitungsanlage, insbesondere eine Schweißzelle mit den Merkmalen im Oberbegriff des Hauptanspruchs.

Derartige Bearbeitungsanlagen, insbesondere Schweißzellen, sind aus der Praxis bekannt. Sie dienen zur mehrstufigen Bearbeitung von Werkstücken, insbesondere von Teilen oder kompletten Karosserien von Kraftfahrzeugen. Die Anlage besteht aus mehreren Bearbeitungsstationen mit Robotern und besitzt außerdem mindestens eine Drehstation, welche mindestens zwei Arbeitsstellen zur simultanen Durchführung von verschiedenen Arbeitsvorgängen aufweist. Die Drehstation ist in der Praxis als Drehtisch ausgebildet.

Die FR 2 712 833 A1 zeigt eine Bearbeitungsanlage für Karosserieteile mit mehreren in Reihe verketteten Bearbeitungszellen mit Robotern. Zwischen den Zellen sind stationäre Ablagetische oder Bandförderer angeordnet, an denen die Karosserieteile zur Übergabe an die Folgezelle abgelegt werden. Die Roboter haben nur Transportaufgaben, wobei sie das am eingangseitigen Ablagetisch bereit gestellte Karosserieteil aufnehmen, zu ein oder mehreren stationären Werkzeugen bewegen und ausgangseitig auf dem nächsten Ablagetisch zum Weitertransport ablegen. Die Bearbeitungsanlage erlaubt die Bearbeitung von zwei unterschiedlichen Karosserietypen in parallelen Transportflüssen, die sich jeweils innerhalb der Zellen verzweigen und an den Ablagetischen wieder schneiden, wobei in den Zellen typbezogene unterschiedliche Bearbeitungen vorgenommen werden. Hierfür gibt es verschiedene Ausführungsformen. In der einen Variante ist in der Zelle ein einzelner Roboter vorhanden, der beide Karosserieteile transportiert und um den sich beide Transportbahnen verzweigen. Rund um den Roboter sind entlang der verzweigten Transportbahnen unterschiedliche, typbezogene Werkzeuge angeordnet. Der Roboter dreht sich je nach Karosserietyp nach links oder rechts und fährt dabei die jeweiligen Werkzeuge an. In der anderen Variante sind in der Zelle zwei Transportroboter parallel nebeneinander angeordnet und dabei jeweils einem Karosserieteil und einer Transportbahn zugeordnet. Sie überschneiden sich mit ihren Arbeitsbereichen an den Ablagetischen. Jedem dieser Roboter ist entlang seiner Transportbahn zwischen den Ablagetischen mindestens ein eigenes, stationäres, typbezogenes Werkzeug zugeordnet.

Die DE 197 13 860 A1 offenbart eine andere Bearbeitungsanlage für Karosserieteile mit mehreren entlang einer Transferlinie aufgereihten Framing- und Ausschweißstationen, die jeweils mit mehreren Schweißrobotern ausgerüstet sind. Zwischen den Stationen sind weitere Roboter zum Transport der Karosserien oder deren Paletten angeordnet. In der Framingstation werden Bauteile zugeführt, die in benachbarten Teilefertigungsbereichen mit Roboterunterstützung hergestellt werden. Hierbei werden Roboter zum Bauteiltransport und zur Bauteilbearbeitung eingesetzt.

Es ist Aufgabe der vorliegenden Erfindung, eine verbesserte Bearbeitungsanlage aufzuzeigen.

Die Erfindung löst diese Aufgabe mit den Merkmalen im Hauptanspruch.
Der Ersatz des Drehtisches durch zwei oder mehr mehrachsig bewegliche Dreheinheiten bietet verschiedene Vorteile. Zum einen werden durch die zwei selbstständigen Dreheinheiten die Betriebssicherheit und die Flexibilität erhöht. Die Dreheinheiten können dank der mehrachsigen Beweglichkeit einander ausweichen und bieten einen größeren Funktionsumfang und eine bessere Anpassungsfähigkeit an unterschiedliche Aufgaben als die vorbekannten einfachen Drehtische. Zum anderen können die Dreheinheiten und die Arbeitsstellen funktional und zeitlich voneinander in Grenzen entkoppelt werden.

Der Einsatz von Transportrobotern, insbesondere mehrachsigen Gelenkarmrobotern, als Dreheinheit bietet weitere Vorteile. Einerseits kann die Ergonomie an manuell bedienten Arbeitsstellen, insbesondere an Einlegestellen für die Zuführung und Komplettierung von Werkstücken verbessert werden. Ein Roboter ist Dank seiner Freiheitsgrade mit dem Greifer in der Lage, eine für die Einlegearbeiten eines Werkes ergonomisch optimierte Position einzunehmen. Andererseits kann diese Positionierflexibilität auch zur Aufnahme unterschiedlicher Werkstücke von einem Fördersystem benutzt werden. Ein Roboter lässt sich wesentlich besser und vor allem ohne konstruktive Umbaumaßnahmen an wechselnde Aufnahmesituationen von Werkstücken anpassen. Ferner bietet eine mit Robotern ausgestattete Drehstation eine wesentlich höhere Arbeitsflexibilität, weil unterschiedliche Werkstücke im freien Mix aufgenommen und transportiert werden können. Dies lässt sich durch wechselbare Greifwerkzeuge erreichen. Verbessert ist auch die eingangs erwähnte Verfügbarkeit der Drehstation. Bei Ausfall eines Roboters können der oder die Anderen noch weiterarbeiten, wodurch ein Anlagenstillstand vermieden wird.

Auch an der anderen Arbeitsstelle, die vorzugsweise als Fügeplatz, insbesondere Schweißplatz, ausgebildet ist, haben Roboter gegenüber einem Drehtisch wesentliche Vorteile. Der Transportroboter kann das gehaltene Werkstück in eine bearbeitungsgünstige Lage bringen und diese Lage auch bei Bedarf verändern, was mit einem Drehtisch nicht möglich ist. Bei einer robotergestützten Drehstation sind zwar durch die Roboter höhere Grundkosten als bei einem Drehtisch vorhanden. Die Investitionskosten für die Flexibilisierung der Drehstation und damit der gesamten Bearbeitungsanlage sind jedoch wesentlich geringer als bei einem Drehtisch.

Ein besonderer Vorteil der robotergestützten Drehstation besteht in der deutlich gesteigerten Typen flexibilisierung. In Verbindung mit beidseitigen Greiferablagen und dort bevorrateten, typbezogenen Greifwerkzeugen können von den Transportrobotern nicht nur unterschiedliche Grundtypen, sondern auch innerhalb eines Typs weitere Varianten, z.B. linke und rechte Seitenwandteile parallel gehandhabt und in der Anlage bearbeitet werden.

In den Unteransprüchen sind weitere vorteilhafte Ausgestaltungen der Erfindung angegeben.'

Die Erfindung ist in den Zeichnungen beispielsweise und schematisch dargestellt. Im einzelnen zeigen:
- Figur 1:: Eine Draufsicht auf eine Bearbeitungsanlage mit einer Drehstation und zwei Bearbeitungsstationen für einen flexiblen Typenmix und
- Figur 2:: eine erweiterte Bearbeitungsanlage mit zwei Drehstationen und einer weiteren Flexibilisierung auf Typvarianten.

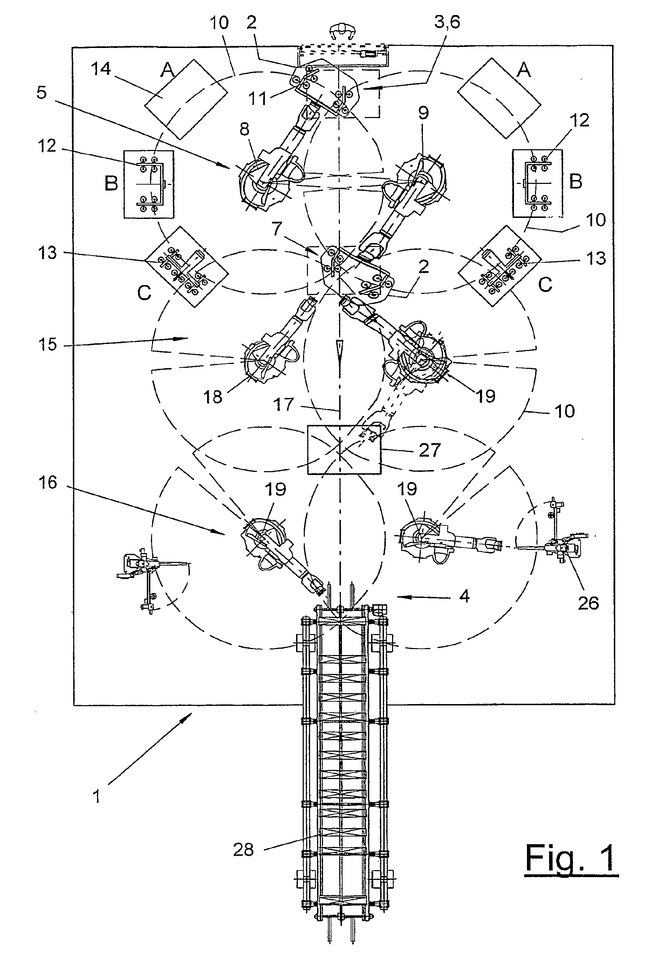

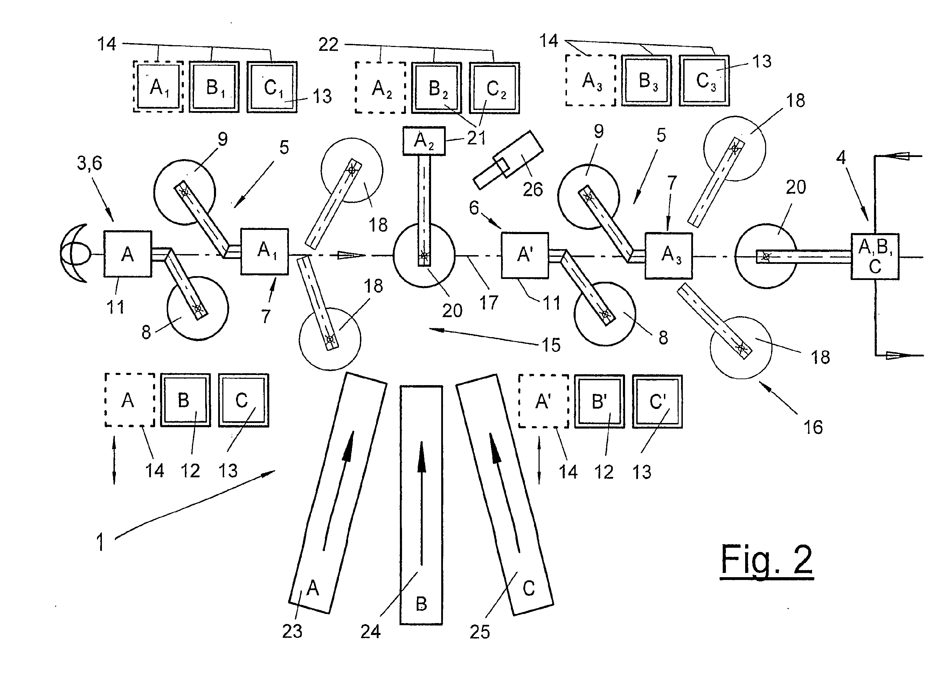

In Figur 1 und 2 ist jeweils in der Draufsicht schematisch eine Bearbeitungsanlage (1), hier z.B. eine Schweißzelle, für die mehrstufige Bearbeitung von Werkstücken (2) dargestellt. Bei den Werkstücken (2) handelt es sich um Teile von Fahrzeugkarosserien oder um komplette Karosserien. Innerhalb der Bearbeitungsanlage (1) sind entlang einer Transferlinie (17) ein oder mehrere Drehstationen (5) und ein oder mehrere Bearbeitungsstationen (15,16) hintereinander angeordnet. Die Transferlinie (17) kann wie im gezeigten Ausführungsbeispiel gerade verlaufen. Sie kann alternativ auch abgewinkelt sein. Am Eingang der Anlage (1) befindet sich eine manuelle oder automatische Werkstückzuführung (3). Ausgangseitig ist eine ebenfalls manuelle oder automatische Werkstückabgabe (4) angeordnet. In den dargestellten Ausführungsbeispielen befindet sich an der Werkstückzuführung (3) mindestens ein Werker, der die Werkstücke (2) von Hand zuführt und einlegt sowie gegebenenfalls zusätzliche Bauteile am Werkstück einlegt. Die Werkstückabgabe (4) besteht aus einem geeigneten Förderer (28), z.B. einem Stauförderer. Bei den gezeigten Werkstücken (2) handelt es sich z.B. um vordere und hintere Bodenbleche, Türen, Motorhauben etc.

Die Bearbeitungsanlage (1) ist flexibel und erlaubt die Bearbeitung mehrerer unterschiedlicher Karosserietypen A, B, C im frei wählbaren Mix. Bei der Anlage (1) von Figur 2 können innerhalb der Typen noch zusätzliche Typvarianten, z.B. linke und rechte Seitenteile oder Türen parallel oder im freien Mix gefertigt werden. Auch die Anlage (1) von Figur 1 lässt sich entsprechend ausbauen.

Die Bearbeitungsanlage (1) besteht aus mindestens einer Drehstation (5) und ein oder mehreren Bearbeitungsstationen (15,16). In der Ausführungsform von Figur 1 sind eine Drehstation (5) und zwei Bearbeitungsstationen (15,16) hintereinander in Transferrichtung (17) angeordnet. In der Abwandlung von Figur 2 ist eingangseitig eine Drehstation (5) angeordnet, an die sich in Transferrichtung (17) eine Bearbeitungsstation (15) anschließt, auf die wiederum eine zweite Drehstation (5) und danach eine zweite Bearbeitungsstation (16) folgt.

Vorzugsweise ist zumindest an der Eingangsseite der Anlage (1) eine Drehstation (5) angeordnet. Die Drehstation (5) besitzt zwei oder mehr Arbeitsstellen (6,7), von denen die eine Arbeitsstelle (6) der Werkstückführung (3) zugeordnet ist. Die andere, meist in Transferrichtung (17) gegenüber liegende Arbeitsstelle (7) ist vorzugsweise ein Fügeplatz, insbesondere ein Schweißplatz, an dem das zugeführte Werkstück (2) in geeigneter Weise bearbeitet wird. Die zweite Arbeitsstelle (7) ist gleich die Schnittstelle zur folgenden Bearbeitungsstation (15) bzw. (16). Bei der Anlage (1) von Figur 2 ist die erste Arbeitsstelle (6) mit der Werkstückaufnahme an der zweiten Drehstation (5) zugleich die Schnittstelle mit der Abgabeseite der vorgeschalteten Bearbeitungsstation (15).

Die Drehstationen (5) bestehen jeweils aus zwei oder mehr nebeneinander angeordneten mehrachsig beweglichen selbstständigen Dreheinheiten (8,9), die in ihren Bewegungen und Funktionen aufeinander abgestimmt sind. Die Dreheinheiten (8,9) können um die Hochachse rotieren und sind mit vorzugsweise austauschbaren und auf den jeweiligen Karosserietyp oder gegebenenfalls auch auf die Typvariante angepassten Greifwerkzeugen (11,12,13) ausgerüstet. Die Dreheinheiten (8,9) können in beliebig geeigneter Weise ausgebildet sein. Vorzugsweise handelt es sich um drehbare mehrachsige Transportroboter.

Figur 1 verdeutlicht die Arbeitsbereiche (10) der beiden Transportroboter (8,9), die einander an den Arbeitsstellen (6,7) überschneiden. Hierdurch können die Transportroboter (8,9) die Arbeitsstellen mit ihren Greifwerkzeugen (11,12,13) abwechselnd anfahren und die vorerwähnten unterschiedlichen Arbeitsvorgänge mit Werkstückaufnahme und Fügebearbeitung unabhängig voneinander durchführen lassen.

Die Transportroboter (8,9) sind in der bevorzugten Ausführungsform als stationär angeordnete Gelenkarmroboter mit vorzugsweise sechs Achsen ausgebildet. Gegebenenfalls können ein oder mehrere Zusatzachsen vorhanden sein. In Abwandlung der gezeigten Ausführungsform können die Transportroboter (8,9) beweglich bzw. instationär positioniert sein und über geeignete Fahrachsen zusätzliche Dreh- oder Fahrbewegungen ausführen. In der gezeigten Ausführungsform sind die Transportroboter (8,9) vorzugsweise beidseits und spiegelsymmetrisch zur Transferlinie (17) angeordnet. Diese Anordnung kann alternativ auch geändert werden. Die Transportroboter (8,9) sind vorzugsweise als Schwerlastroboter ausgebildet und haben eine Traglast von ca. 500 kg oder mehr.

Die Transportroboter (8,9) sind mit ihren Robotersteuerungen an eine übergeordnete Prozess- und Anlagensteuerung angeschlossen und in ihren Funktionen und Bewegungen über die Steuerung (nicht dargestellt) aufeinander abgestimmt. Sie bewegen sich hierbei kollisionsfrei zwischen den Arbeitsstellen (6,7) und vorzugsweise auf getrennten außen liegenden Bahnen und in entgegengesetzter Richtung.

Die Transportroboter (8,9) können allerdings insoweit voneinander entkoppelt sein, dass sie nicht alle Bewegungen und Funktionen mit spiegelbildlicher Synchronisation und auch nicht immer im gleichen Takt ausführen müssen. Dies gilt insbesondere, wenn im Mix unterschiedliche Werkstücke (2) mit differierenden Prozesszeiten bearbeitet werden. Prozess-, Transport- und andere Nebenzeiten, z.B. Werkzeugwechselzeiten, können flexibel gehandhabt und zum Ausgleich ggf. verändert und angepasst werden.

An der Drehstation (5) können je nach geforderter Werkstückflexibilität ein oder mehrere Greiferablagen (14) für unterschiedliche Greifwerkzeuge (11, 12, 13) im Arbeitsbereich (10) der Transportroboter (8,9) angeordnet sein. In Figur 1 und 2 sind jeweils für jeden Transportroboter (8,9) drei Greiferablagen (14) in Reihe oder im Bogen angeordnet. Die Greiferablagen (14) sind typ- bzw. typvariantenbezogen und können mit geeigneten Förderern zum Ein- und Ausschleusen der Greifwerkzeuge (11,12,13) versehen sein. Hierüber lassen sich die Greifwerkzeuge austauschen oder für Mess- und Wartungsarbeiten oder zu anderen Zwecken aus- und einschleusen.

In der Anlage von Figur 1 werden drei verschiedene Typen A, B, C, von Werkstücken (2) in der Anlage (1) bearbeitet. Die beiden Transportroboter (8,9) haben hierfür jeweils drei typbezogene Greifwerkzeuge (11,12,13), wobei beide Transportroboter (8,9) den gleichen Werkzeugsatz besitzen. Wie Figur 1 verdeutlicht, sind die Greifwerkzeuge (11,12,13) vorzugsweise als sogenannte Geometriegreifer oder Geogreifer ausgebildet, welche die Werkstücke (2) in genau definierten Lagen greifen und halten.

In der Anlage (1) von Figur 2 werden zusätzlich zu den drei Werkstücktypen A, B, C jeweils zwei Typvarianten gefahren. Dementsprechend haben die Transportroboter (8,9) unterschiedliche Greifersätze A, B, C bzw. A1, B1 und C1 sowie entsprechende Greiferablagen (14).

An der Werkstückzuführung (3) halten die Transportroboter (8,9) das jeweils gehaltene Greifwerkzeug (11,12,13) in eine für den Werker ergonomisch günstige Lage zum Einlegen der Werkstücke (2) und gegebenenfalls weiterer Bauteile. Diese Einlegeposition ist beliebig wählbar und kann außerdem innerhalb der Typen gegebenenfalls auch der Typvarianten geändert werden, was lediglich eine Umprogrammierung des Transportroboters (8,9) verlangt. Auch bei einem kompletten Werkstückwechsel auf völlig andere Arten und gegebenenfalls auch Typen und Typvarianten von Werkstücken bedarf es ebenfalls an der Drehstation (5) lediglich einer Umprogrammierung der Transportroboter (8,9) und einer Bereitstellung entsprechend geänderter und angepasster Greifwerkzeuge (11, 12, 13).

Alternativ zum manuellen Einlegen der Werkstücke (2) durch einen Werker können die Werkstücke (2) an der Arbeitsstelle (6) auch maschinell und automatisch an die Greifwerkzeuge (11,12,13) übergeben werden. Eine solche Ausführung ist z. B. in Figur 2 bei der zweiten Drehstation (5) und der dortigen Arbeitsstelle (6) dargestellt. In vorgeschalteten Bearbeitungsstation (15) ist ein Roboter (20) angeordnet, der vor allem Transport- und Handlingaufgaben hat und der nach Beendigung der Werkstückbearbeitung in der Bearbeitungsstation (15) das Werkstück an den bereit stehenden Transportroboter (8,9) der zweiten Drehstation (5) übergibt. Diese Übergabe folgt vorzugsweise auf direktem Wege im sogenannten Hand-Shake-Betrieb. Die Greifwerkzeuge der Roboter (8,9,20) sind hierzu entsprechend ausgebildet. Alternativ kann die Übergabe auch mittels einer zwischengeschalteten Werkstückablage auf einem Tisch (nicht dargestellt) erfolgen.

An der Arbeitsstelle (7) und dem dortigen Fügeplatz hält in den Drehstationen (5) der jeweilige Transportroboter (8,9) das Werkstück (2) in einer definierten Bearbeitungsposition. In der Bearbeitungsstation (15,16) sind ein oder mehrere Roboter (18), z. B. Schweißroboter, positioniert, die die Bearbeitung des Werkstücks (2) durchführen. Während der Bearbeitung kann der Transportroboter (8,9) das Werkstück (2) auch umorientieren. Außer Schweißoperationen können auch beliebige andere Bearbeitungsvorgänge stattfinden. Die Bearbeitungswerkzeuge der Roboter (18) sind der Übersicht wegen in den Zeichnungen nicht dargestellt.

In der einfacheren Anlage (1) von Figur 1 sind ein Schweißroboter (18) und ein kombinierter Schweiß- und Transportroboter (19) angeordnet. Nach Beendigung der Fügeoperation an der Arbeitsstelle (7) wechselt der Roboter (19) sein Fügewerkzeug gegen einen geeigneten Greifer, übernimmt das bereit gehaltene Werkstück (2) vom jeweiligen Transportroboter (8,9) und transportiert es zur nächsten Bearbeitungsstation (12), wobei er es z. B. auf eine Werkstückablage (27) niederlegt. Anschließend wechselt der Roboter (19) wieder das Werkzeug und steht für die nächste Fügeoperation bereit.

An der zweiten Bearbeitungsstation (16) sind zwei ähnlich konfigurierte Roboter (18,19) angeordnet, welche als reine Bearbeitungsroboter, insbesondere Schweißroboter, als reine Transportroboter oder gegebenenfalls als Mischform ausgebildet und mit entsprechenden und gegebenenfalls wechselbaren Werkzeugen bestückt sind. Die Roboter (18,19) führen in Figur 1 z. B. vor allem Handlingaufgaben durch, wobei sie das von der Werkstückablage (27) aufgenommene Werkstück (2) zu ein oder mehreren stationären Bearbeitungsvorrichtungen (26) in ihrem Arbeitsbereich (10), z. B. zu stationären Schweißzangen, Klebeauftragsvorrichtungen etc. transportieren und hier entlang führen. Abschließend übergeben ein oder beide Roboter (18,19) ihr Werkstück (2) an die Werkstückabgabe (4), z. B. dem dargestellten Förderer (28).

In der komplexeren Anlage 1 von Figur 2 ist in der ersten Bearbeitungsstation (15) neben den beiden Schweißrobotern (18) ein Transportroboter (20) angeordnet, der ein oder mehrere gegebenenfalls wechselbare Werkzeuge (21) zum Fügen oder zum Handling besitzt. Hierbei sind z. B. am einen Rand des Arbeitsbereiches mehrere Werkzeugablagen (22) für unterschiedliche typbezogene Werkzeuge (21) angeordnet. Dies sind z. B. die Werkzeugtypen A2, B2 und C2.

Auf der anderen Seite der Bearbeitungsstation (15) sind mehrere Bauteilzuführungen (23,24,25) für unterschiedliche auf die Werkstücktypen A, B und C bezogene Bauteile angeordnet. Wenn innerhalb der Typvarianten diese Bauteile gleich sind, was z.B. bei linken und rechten Türkomponenten der Fall sein kann, genügt eine der Typenanzahl entsprechende Anzahl von Bauteilzuführungen (23,24,25). Falls die Bauteile auch innerhalb der Typvarianten differieren, kann sich die Zahl der Bauteilzuführungen entsprechend erhöhen. Gegebenenfalls kann auch mit ein oder mehreren flexiblen Bauteilzuführungen gearbeitet werden, die verschiedene typbezogene oder typvariantenbezogene Bauteile bereit stellen.

Nach Beendigung der Bearbeitungsoperation der Schweißroboter (18) an der Arbeitsstelle (7) der ersten Drehstation (5) kann der Transportroboter (20) mit dem vorhandenen oder einem gegebenenfalls gewechselten Greifwerkzeug das Werkstück (2) vom jeweiligen Transportroboter (8,9) übernehmen und an einer stationären Bearbeitungsvorrichtung (26) zustellen und gegebenenfalls entlang führen. Nach Beendigung dieser Operation legt er das Werkstück (2) an den in der anschließenden Drehstation (5) bereit stehenden Transportroboter (8,9) und dessen Greifwerkzeug (11,12,13) in der vorbeschriebenden Weise ein.

Danach kann der Transportroboter (20) mit seinem Werkzeug (21) ein oder mehrere lose Bauteile von den Bauteilzuführungen aufnehmen und am abgelegten Werkstück (2) an der zweiten Drehstation (5) beifügen.

Alternativ kann der Transportroboter (20) zwischen diesen Übergabeoperationen noch weitere Füge- und/oder Handlingoperationen ausführen.

In der zweiten Drehstation (5) von Figur 2 befinden sich am Rand des Arbeitsbereichs der Transportroboter (8,9) wiederum mehrere Greiferablagen (14) für entsprechende typbezogene und gegebenenfalls auch variantenbezogene Greifwerkzeuge (11, 12, 13). Diese können sich vom Greifersatz der ersten Drehstation (5) unterscheiden und sind durch die Bezeichnungen A', B',C' bzw. A3, B3 und C3 kenntlich gemacht. Wie Figur 2 verdeutlicht, halten auch die Transportroboter (8,9) in beiden Drehstationen (5) jeweils unterschiedliche Greifwerkzeuge A/A1 bzw. A'/A3.

An der Arbeitsstelle (7) der zweiten Drehstation (5) werden von den beiden Schweißrobotern (18) der zweiten Bearbeitungsstation (16) wiederum Fügeoperationen durchgeführt, wobei z.B. die in der vorigen Station vorbereiteten Bauteile gefügt, z.B. geheftetet und/oder ausgeschweißt werden. In der zweiten Bearbeitungsstation (16) ist ebenfalls ein zusätzlicher Transportroboter (20) angeordnet, der nach Beendigung der Fügeoperation das Werkstück (2) übernimmt und zur Werkstückabgabe (4) transportiert.

Abwandlungen der gezeigten Ausführungsformen sind in verschiedener Weise möglich. Zum einen kann die Zahl und Anordnung der verschiedenen Stationen (5,15,16) innerhalb der Behandlungsanlage (1) beliebig variieren. Variabel ist ferner die Zahl und Anordnung der Greiferablagen (14) und der Greifwerkzeuge (11,12,13) sowie die erforderliche oder gewünschte Typen- oder Variantenvielfalt.

Ferner kann die Ausbildung und Bestückung der Bearbeitungsstationen (15,16) beliebig variieren. Dies betrifft nicht nur die Zahl, Anordnung und den Aufgabenbereich der Roboter (18,19,20), sondern auch eventuelle weitere Aktionskomponenten. Die Schweißroboter (18) können ferner ebenfalls wechselbare Bearbeitungswerkzeuge besitzen und in ihrem Arbeitsbereich über entsprechende Werkstückablagen (nicht dargestellt) verfügen.

Die in Figur 1 und 2 gezeigten Anlagen (1) können sofort bei der Erstellung in der gezeigten Konfiguration aufgebaut werden. Alternativ können sie aber auch in Teilen erstellt werden, wobei z. B. zunächst die eine Anlagenhälfte auf der einen Seite der Transferlinie (17) aufgebaut und erst zu einem späteren Zeitpunkt die zweite Hälfte nachgerüstet wird. Es minimiert den anfänglichen Investitionseinsatz und erlaubt ein bedarfsgerechtes Wachsen der Bearbeitungsanlage (1) und eine zielgerichtete Flexibilisierung zum benötigen Zeitpunkt. Hierbei können auch die Drehstationen (5) zunächst halbiert sein und erst im Endausbau ihre volle Funktion erhalten.

Ferner ist es möglich, in einer Drehstation (5) mehr als zwei Transportroboter (8,9) unterzubringen und außerdem mehr als zwei Arbeitsstellen (6,7) zu schaffen. Die Transferlinie (17) kann sich hierbei auch verzweigen. Ferner ist es möglich, mehrere der gezeigten Bearbeitungsanlagen (1) nebeneinander aufzubauen und eingangs- und ausgangseitig bewegliche Werkstückzuführungen (3) bzw. Werkstückabgaben (4) anzuordnen, welche die Parallelanlagen abwechselnd bedienen. Ferner ist es möglich, mit den Transportrobotern (8,9) und den Drehstationen (5) jeweils mehrere Werkstückzuführungen (3) bzw. Werkstückabgaben (4) anzufahren. Deren Zahl und Anordnung hängt von der Taktzeit der Anlage (1) und der Komplexität der Zuführ- und Abgabeoperationen ab.

### BEZUGSZEICHENLISTE

- 1: Bearbeitungsanlage, Schweißzelle
- 2: Werkstück
- 3: Werkstückzuführung
- 4: Werkstückabgabe
- 5: Drehstation
- 6: Arbeitsstelle, Werkstückaufnahme
- 7: Arbeitsstelle, Fügeplatz, Schweißplatz
- 8: Dreheinheit, Transportroboter, Schwerlastroboter
- 9: Dreheinheit, Transportroboter, Schwerlastroboter
- 10: Arbeitsbereich
- 11: Greifwerkzeug, Geogre ifer, Typ A
- 12: Greifwerkzeug, Geogre ifer, Typ B
- 13: Greifwerkzeug, Geogreifer, Typ C
- 14: Greiferablage
- 15: Bearbeitungsstation
- 16: Bearbeitungsstation
- 17: Transferlinie
- 18: Roboter, Schweißrobot er
- 19: Roboter, Schweiß- und Transportroboter
- 20: Roboter, Transportroboter
- 21: Werkzeug für Fügen oder Handling
- 22: Werkzeugablage
- 23: Bauteilzuführung, Typ A
- 24: Bauteilzuführung, Typ B
- 25: Bauteilzuführung, Typ C
- 26: stationäre Bearbeitungsvorrichtung
- 27: Werkstückablage
- 28: Förderer

## Patentansprüche

1. Bearbeitungsanlage, insbesondere Schweißzelle, zur Bearbeitung von Werkstücken (2), insbesondere Karosserieteilen von Fahrzeugen, mit ein oder mehreren Bearbeitungsstationen (15,16) mit Robotern (18,19,20) und mindestens einer Drehstation (5), welche mindestens zwei Arbeitsstellen (6,7) zur simultanen Durchführung von verschiedenen Arbeitsvorgängen aufweist, **dadurch gekennzeichnet, dass** die Drehstation (5) mindestens zwei nebeneinander angeordnete mehrachsig bewegliche Dreheinheiten (8,9) mit Greifwerkzeugen (11,12,13) und mit Arbeitsbereichen (10) aufweist, die einander an den Arbeitsstellen (6,7) überschneiden, wobei die eine Arbeitsstelle (6) als Werkstückaufnahme und die andere Arbeitsstelle (7) als Fügeplatz, ausgebildet ist und wobei am Fügeplatz zur Durchführung von Fügeoperationen mindestens ein Roboter (18,19) mit einem Fügewerkzeug angeordnet ist.

2. Bearbeitungsanlage nach Anspruch 1, **dadurch gekennzeichnet, dass** die Dreheinheiten (8,9) als drehbare Transportroboter (8,9) ausgebildet sind.

3. Bearbeitungsanlage nach Anspruch 1 oder 2, **dadurch gekennzeichnet, dass** die Transportroboter (8,9) als stationäre, mehrachsige Gelenkarmroboter ausgebildet sind.

4. Bearbeitungsanlage nach Anspruch 1, 2 oder 3, **dadurch gekennzeichnet, dass** die Transportroboter (8,9) als Schwerlastroboter mit einer Traglast von ca. 500 kg oder mehr ausgebildet sind.

5. Bearbeitungsanlage nach einem der vorhergehenden Ansprüche, **dadurch gekennzeichnet, dass** die Transportroboter (8,9) austauschbare Greifwerkzeuge (11,12,13) für unterschiedliche Werkstücke (2), insbesondere unterschiedliche Karosserietypen, tragen.

6. Bearbeitungsanlage nach einem der vorhergehenden Ansprüche, **dadurch gekennzeichnet, dass** im Arbeitsbereich (10) der Transportroboter (8,9) mehrere Greiferablagen (14) angeordnet sind.

7. Bearbeitungsanlage nach einem der vorhergehenden Ansprüche, **dadurch gekennzeichnet, dass** die Greifwerkzeuge (11,12,13) als Geometriegreifer ausgebildet sind, die das Werkstück (2) in einer definierten Lage halten.

8. Bearbeitungsanlage nach einem der vorhergehenden Ansprüche, **dadurch gekennzeichnet, dass** der Fügeplatz als Schweißplatz ausgebildet ist.

9. Bearbeitungsanlage nach einem der vorhergehenden Ansprüche, **dadurch gekennzeichnet, dass** die Drehstation (5) mit mindestens einer Arbeitsstelle (6,7) in Transferrichtung (16) an mindestens eine mit ein oder mehreren Robotern (18,19,20) ausgerüstete Bearbeitungsstation (15,16) angeschlossen ist, wobei die Arbeitsstelle(n) (6,7) in deren Roboter-Arbeitsbereich (10) liegt/liegen.

10. Bearbeitungsanlage nach einem der vorhergehenden Ansprüche, **dadurch gekennzeichnet, dass** die Bearbeitungsstation (15,16) im Arbeitsbereich (10) der Roboter (18,19,20) mindestens eine Werkzeugablage (22) für wechselbare Roboterwerkzeuge (21) aufweist.

11. Bearbeitungsanlage nach einem der vorhergehenden Ansprüche, **dadurch gekennzeichnet, dass** die Bearbeitungsstation (15,16) im Arbeitsbereich (10) der Roboter (18,19,20) ein oder mehrere Bauteilzuführungen (23,24,25) aufweist.

12. Bearbeitungsanlage nach einem der vorhergehenden Ansprüche, **dadurch gekennzeichnet, dass** die Bearbeitungsstation (15,16) im Arbeitsbereich (10) der Roboter (18,19,20) ein oder mehrere stationäre Bearbeitungsvorrichtungen (26) aufweist.

13. Bearbeitungsanlage nach einem der vorhergehenden Ansprüche, **dadurch gekennzeichnet, dass** die Bearbeitungsanlage (1) am Eingang der Transferlinie (17) eine manuelle oder automatische Werkstückzuführung (3) und am Ausgang eine manuelle oder automatische Werkstückabgabe (4) aufweist.

14. Bearbeitungsanlage nach einem der vorhergehenden Ansprüche, **dadurch gekennzeichnet, dass** die Werkstückzuführung (3) und/oder Werkstückabgabe (4) eine Arbeitsstelle (6) einer Drehstation (5) bildet.

## Claims

1. Processing equipment, in particular welding cell, for the processing of workpieces (2), in particular parts of motor vehicle bodies, with one or more processing stations (15, 16) with robots (18, 19, 20) and at least one turntable station (5), which has at least two workstations (6, 7) for simultaneous execution of various operations, **characterized in that** turntable station (5) has at least two multiaxially movable rotating units (8, 9) arranged side by side, with gripping tools (11, 12, 13) and with working zones (10) which overlap one another at the workstations (6, 7), one workstation (6) being designed as workpiece support and the other workstation (7) as joining station, with at least one robot (18, 19) with a joining tool being arranged at the joining station for carrying out joining operations.

2. Processing equipment according to Claim 1, **characterized in that** the rotating units (8, 9) are designed as rotatable transport robots (8, 9).

3. Processing equipment according to Claim 1 or 2, **characterized in that** the transport robots (8, 9) are designed as stationary, multiaxial articulated-arm robots.

4. Processing equipment according to Claim 1, 2 or 3, **characterized in that** the transport robots (8, 9) are designed as heavy-duty robots with a carrying capacity of approx. 500 kg or more.

5. Processing equipment according to one of the preceding claims, **characterized in that** the transport robots (8, 9) are fitted with replaceable gripping tools (11, 12, 13) for different workpieces (2), in particular different body types.

6. Processing equipment according to one of the preceding claims, **characterized in that** several gripper deposits (14) are arranged in the working zone (10) of the transport robots (8; 9).

7. Processing equipment according to one of the preceding claims, **characterized in that** the gripping tools (11, 12, 13) are designed as geometric grippers, which hold the workpiece (2) in a defined position.

8. Processing equipment according to one of the preceding claims, **characterized in that** the joining station is designed as a welding station.

9. Processing equipment according to one of the preceding claims, **characterized in that** the turntable station (5) is connected with at least one workstation (6, 7) in transfer direction (16) to at least one processing station (15, 16) equipped with one or more robots (18, 19, 20), with the workstation(s) (6, 7) being located in their robot working zone (10).

10. Processing equipment according to one of the preceding claims, **characterized in that** the processing station (15, 16) has at least one tool deposit (22) for interchangeable robot tools (21) in the working zone (10) of the robots (18, 19, 20).

11. Processing equipment according to one of the preceding claims, **characterized in that** the processing station (15, 16) has one or more component loading devices (23, 24, 25) in the working zone (10) of the robots (18, 19, 20).

12. Processing equipment according to one of the preceding claims, **characterized in that** the processing station (15, 16) has one or more stationary processing devices (26) in the working zone (10) of the robots (18, 19, 20).

13. Processing equipment according to one of the preceding claims, **characterized in that** the processing equipment (1) has a manual or automatic workpiece loading device (3) at the entrance of the transfer line (17) and a manual or automatic workpiece discharge device (4) at the exit.

14. Processing equipment according to one of the preceding claims, **characterized in that** the workpiece loading device (3) and/or workpiece discharge device (4) forms a workstation (6) of a turntable station (5).

## Revendications

1. Installation d'usinage, en particulier cellule de soudage, pour usiner des pièces (2), en particulier des parties de carrosserie de véhicules, comportant un ou plusieurs postes d'usinage (15, 16) munis de robots (18, 19, 20) et au moins un poste de rotation (5) qui comprend au moins deux endroits de travail (6, 7) pour exécuter simultanément différentes opérations de travail,
**caractérisée en ce que** le poste de rotation (5) comporte au moins deux unités de rotation (8, 9) mobiles et multiaxiales, placées les unes à côté des autres et munies d'outils de préhension (11, 12, 13) et de zones de travail (10) qui se recoupent aux endroits de travail (6, 7), l'un des endroits de travail (6) étant un récepteur de pièces et l'autre endroit de travail (7) un point d'assemblage et au moins un robot (18, 19) équipé d'un outil d'assemblage se trouvant au point d'assemblage pour exécuter des opérations d'assemblage.

2. Installation d'usinage selon la revendication 1, **caractérisée en ce que** les unités de rotation (8, 9) sont des robots de transport (8, 9) rotatifs.

3. Installation d'usinage selon la revendication 1 ou 2, **caractérisée en ce que** les robots de transport (8, 9) sont des robots fixes et multiaxiaux à bras articulé.

4. Installation d'usinage selon la revendication 1, 2 ou 3, **caractérisée en ce que** les robots de transport (8, 9) sont des robots pour lourde charge d'environ 500 kg ou plus.

5. Installation d'usinage selon l'une des revendications précédentes, **caractérisée en ce que** les robots de transport (8, 9) portent des outils de préhension (11, 12, 13) interchangeables pour différentes pièces (2), en particulier différents types de carrosserie.

6. Installation d'usinage selon l'une des revendications précédentes, **caractérisée en ce que** plusieurs dépôts de préhenseur (14) se trouvent dans la zone de travail (10) des robots de transport (8, 9).

7. Installation d'usinage selon l'une des revendications précédentes, **caractérisée en ce que** les outils de préhension (11, 12, 13) sont des préhenseurs géométriques qui tiennent la pièce (2) dans une certaine position.

8. Installation d'usinage selon l'une des revendications précédentes, **caractérisée en ce que** le point d'assemblage est un point de soudage.

9. Installation d'usinage selon l'une des revendications précédentes, **caractérisée en ce que** le poste de rotation (5) muni d'au moins un endroit de travail (6, 7) est raccordé en direction de transfert (16) à au moins un poste d'usinage (15, 16) équipé d'un ou de plusieurs robots (18, 19, 20), le ou les endroits de travail (6, 7) se trouvant dans leur zone de travail (10) du robot.

10. Installation d'usinage selon l'une des revendications précédentes, **caractérisée en ce que**, dans la zone de travail (10) des robots (18, 19, 20), le poste d'usinage (15, 16) comporte au moins un dépôt d'outil (22) pour des outils (21) de robot échangeables.

11. Installation d'usinage selon l'une des revendications précédentes, **caractérisée en ce que**, dans la zone de travail (10) des robots (18, 19, 20), le poste d'usinage (15, 16) comporte un ou plusieurs amenages de composant (23, 24, 25).

12. Installation d'usinage selon l'une des revendications précédentes, **caractérisée en ce que**, dans la zone de travail (10) des robots (18, 19, 20), le poste d'usinage (15, 16) comporte un ou plusieurs dispositifs d'usinage (26) fixes.

13. Installation d'usinage selon l'une des revendications précédentes, **caractérisée en ce que**, à l'entrée de la ligne de transfert (17), l'installation d'usinage (1) comporte un amenage de pièce (3) manuel ou automatique et à la sortie une remise d'outil (4) manuelle ou automatique.

14. Installation d'usinage selon l'une des revendications précédentes, **caractérisée en ce que** l'amenage de pièce (3) et/ou la remise d'outil (4) forme un endroit de travail (6) d'un poste de rotation (5).
